# EUROPÄISCHE PATENTSCHRIFT

(11) **EP 2 002 283 B1**
(45) Veröffentlichungstag und Bekanntmachung des Hinweises auf die Patenterteilung: **10.07.2013**
(21) Anmeldenummer: 07726753.2
(22) Anmeldetag: 09.03.2007
(51) Int. Cl.: G01S 15/08, G01S 17/08

(54) **VORRICHTUNG ZUR DISTANZMESSUNG**
APPARATUS FOR MEASURING DISTANCE
DISPOSITIF DE MESURE DE DISTANCE

(30) Priorität: 23.03.2006 DE 102006013356
(43) Veröffentlichungstag der Anmeldung: 17.12.2008
(73) Patentinhaber: Robert Bosch GmbH, 70442 Stuttgart (DE)
(72) Erfinder: TIEDE, Steffen, 71083 Herrenberg (DE); LUKAS, Heiner, 70197 Stuttgart (DE); ADAMCZAK, Wolfgang, 70597 Stuttgart (DE)
(86) Internationale Anmeldenummer: PCT/EP2007/052231
(87) Internationale Veröffentlichungsnummer: WO 2007/107465

(56) Entgegenhaltungen:
- WO-A-2005/029123
- DE-U1-202004 020 220
- GB-A- 1 506 743
- US-A- 5 287 627
- US-A1- 2001 034 953
- US-A1- 2005 198 850

## Beschreibung

Die Erfindung geht aus von einer Vorrichtung zur Distanzmessung, insbesondere einer handgehaltenen Vorrichtung zur berührungslosen Distanzmessung mit den Merkmalen des Oberbegriffs des Anspruchs 1.

### Stand der Technik

Vorrichtungen zur Distanzmessung, insbesondere handgehaltene Vorrichtungen zur berührungslosen Distanzmessung, welche mittels eines ausgesandten Messsignals, insbesondere mittels eines modulierten Messsignals, die Bestimmung eines Abstandes zwischen einem Zielobjekt und zumindest einem Referenzpunkt der Vorrichtung ermöglichen, sind seit längerer Zeit in Form von Laserentfernungsmessern oder auch Ultraschallentfernungsmessern bekannt.

Bei derartigen, gattungsgemäßen Entfernungsmessgeräten wird typischerweise die Entfernung zu einem angemessenen Objektes von einem Referenzpunkt aus, an dem das Entfemungsmessgerät an einem entsprechenden Messanschlag angelegt wird, gemessen.

Aus der DE 43 163 48 A1 ist ein Entfernungsmessgerät bekannt, das für unterschiedliche Messaufgaben verwendet werden kann. So kann das Messgerät beispielsweise für den häufig vorkommenden Anwendungsfall einer Messung ausgehend von einer Innenfläche, wie beispielsweise einer Innenwand, eines Bodens oder einer Decke rückseitig, das heißt mit einer objektabgewandten Anschlagfläche an die Referenzfläche angelegt werden. Für den Fall, dass ausgehend von einer Aussenkante gemessen werden soll, kann das bekannte Entfernungsmessgerät in Richtung auf das zu vermessende Objekt mit seiner Vorderseite, das heißt mit einer objektzugewandten Anschlagfläche an die Referenzfläche angelegt werden. Bei der Vorrichtung der DE 43 163 48 A1 sind Vorder- und Rückseite des Gerätes parallel zueinander ausgebildet.

Aus der DE 296 15 514 U1 ist ein elektronisches Abstandsmessgerät mit einem Sender für einen Messstrahl und einem Empfänger für einen zurücklaufenden, reflektierten Strahl sowie mit einer Auswerteeinheit zur Ermittlung des Abstandes vom Messgerät zum Reflektionsort bekannt, welches an zwei, sich parallel gegenüberliegenden Flächen seines im Wesentlichen quaderförmigen Gehäuses, je einen Messspatel aufweist, der vor- und zurückschiebbar am Gehäuse befestigt ist. Die Messspatel, die in Führungen beiderseits am Gerätegehäuse befestigt sind, sind einerseits bis an die Vorderfläche des Gerätes zurückziehbar bzw. in einer anderen stabilen Endstellung um eine genau vorgegebene Strecke ausziehbar. Die aufgezogen Position der Messspatel wird automatisch durch in den Führungen dieser Spatel oder in der Gehäusewand des Messgerätes vorhandene Tastschalter festgestellt und einer Auswerteeinheit des elektronischen Abstandsmessgerätes übermittelt.

Aus der DE 155 510 A1 ist ein optoelektronisches Laserdistanzmessgerät bekannt, welches auf seine der Messrichtung abgewandten Gehäuserückseite einen flächigen Messauschlag aufweist, der aus dem Gehäuse herausgeklappt werden kann.

Die WO 2005/029123 A offenbart ein Messsystem zur Messung von Entfernungen zwischen Messpunkten, bei der eine erste Messeinheit zum Richten eines Messsignals auf einen ersten Messpunkt und eine zweite Messeinheit zum Richten eines Messsignals auf einen zweiten Messpunkt vorgesehen sind. Die Vorrichtung der WO 2005/029123 A ermöglicht somit das glelchzeitige Messen in zwei entgegengesetzte Richtungen und damit beispielsweise die direkte Ermittlung des Abstandes zweier Wände. Das Messsignal der WO 2005/029123 A ist typischerweise ein Ultraschallsignal oder ein sichtbares Lasersignal. In einem speziellen Ausführungsbeispiel schlägt die WO 2005/029123 A vor, zusätzlich zu den Messmitteln, ein drittes optisches Markierungsmittel in Form eines dritten Lasers vorzusehen. Die Strahlachse des dritten Lasers verläuft dabei senkrecht zu der Achse des Messsignals, bzw. der Messsignale und erzeugt somit beispielsweise einen Lichtfleck auf dem Boden eines zu vermessenden Raumes.

Aus der DE 20 2004 020 220 U1 ist Abstandsmessgerät mit mindestens einen Laserstrahl bekannt, welcher auf eine Oberfläche geworfen wird und dabei mindestens eine Referenzlinie bildet, die senkrecht auf der Richtung steht, in welcher das Messsignal ausgesandt wird. Gemäß einer Ausführung der Vorrichtung der DE 20 2004 020 220 U1 umfasst das Abstandsmessgerät ein Gehäuse, ein Mittel zum Projizieren und Detektieren eines Messsignals, eine Laseranzeigeeinrichtung und ein Display. Besagtes Mittel zum Projizieren und Detektieren eines Messsignals sendet von dem vorderen Ende des besagten Gehäuses ein Messsignal zu einer Oberfläche eines Gegenstands aus und detektiert anschließend das reflektierte Signal. Besagte Laseranzeigeeinrichtung kann ebenfalls mindestens einen Laserstrahl auf eine Oberfläche projizieren und dadurch mindestens eine sichtbare Referenzlinie bilden, die senkrecht auf der Richtung steht, in welcher das Messsignal ausgesandt wird. Gemäß einer weiteren Ausführung kann das Abstandsmessgerät ferner einen Sockel-förmigen Adapter umfassen, welcher sich reversibel an dem Gehäuse befestigen lässt. Dazu wird das Gehäuse des Entfernungsmessers in den Adapter eingeclipst. Der Adapter umfasst einen Grundkörper, eine Halterung sowie mindestens einen Knopf, der mit mindestens einer Nadel verbunden ist, welche einziehbar ist und in eine Positionierungsfläche hinausgedrückt werden kann. Der Adapter kann über die Nadeln, die sich auf der dem Entfernungsmesser abgewandten Seite des Adapters befinden, in eine Positionierungsfläche, beispielsweise eine Wand, eingedrückt werden, um den Entfernungsmesser an der Wand zu befestigen.

### Vorteile der Erfindung

Die erfindungsgemäße Vorrichtung zur Distanzmessung wird in Anspruch 1 definiert.

Am Markt vorhandene Vorrichtungen zur Distanzmessung sind fast ausschließlich als Messgeräte und somit insbesondere nicht als Hilfsgeräte für messbegleitende Tätigkeiten wie dem Abtragen und Markieren von Punkten oder Linien konzipiert.

Durch die erfindungsgemäße Vorrichtung zur Distanzmessung wird das Markieren mit einem in der Distanzmessvorrichtung integrierten Zeichen- oder Markierelement möglich. Dabei lassen sich durch die in der erfindungsgemäßen Vorrichtung integrierte Markierfunktion die Tätigkeiten Messen und Markieren in einem Arbeitsgang und mit einem Werkzeug ausführen.

Vorteilhafte Weiterbildungen und Ausführungsformen der erfindungsgemäßen Vorrichtung ergeben sich mit den Merkmalen der abhängigen Ansprüche.

Erfindungsgemäß sind die Markierungsmittel am und/oder im Gehäuse der Vorrichtung ausgebildet bzw. am und/oder im Gehäuse integriert.

Eine besonders vorteilhafte Ausführungsform der erfindungsgemäßen Vorrichtung sieht vor, dass das Gehäuse ein im Wesentlichen hohl-zylindrischen, insbesondere stabförmigen Gehäuseteil aufweist. Dieser hohlzylindrische, insbesondere stabförmige Gehäuseteil kann somit beispielsweise als Aufnahme für eine oder auch mehrere Energiequellen, wie beispielsweise Batterien oder Akkumulatoren der Vorrichtung ausgebildet sein.

Darüber hinaus ist es möglich den stabförmigen Gehäuseteil als Handgriff der Vorrichtung auszubilden, indem der hohl-zylindrische Gehäuseteil auf seiner äußeren Umfangsfläche zumindest teilweise eine Belegung mit beispielsweise einer Softkomponente, dass heißt einem deutlich weicherem Kunststoffelement, als dem übrigen Gehäuse, zu versehen.

Eine derartige erfindungsgemäße Vorrichtung weist somit ein besonders ergonomisches Stab- bzw. Stiftdesign auf, welches es ermöglicht, die als Messstift ausgebildete Vorrichtung ähnlich praktikabel zu führen, wie einen herkömmlichen Schreib-Stift. Darüber hinaus zeichnet sich ein derartiger Messstift durch seine sehr kompakte Bauform aus.

In vorteilhafter Weise sind die Markierungsmittel im Bereich eines axialen Endes des hohl-zylindrischen Gehäuseteils ausgebildet. Die Markierungsmittel lassen sich dabei in vorteilhafter Weise durch ein Bedienelement der Vorrichtung aktivieren. Die Bedienelemente der Vorrichtung und insbesondere die Bedienelemente zur Aktivierung der Markierungsmittel der Vorrichtung sind dabei derart an dem als Griff fungierenden hohl-zylindrischen Gehäuseteils ausgebildet, dass eine Einhandbedienung für Messen und Markieren in einem Arbeitsgang möglich ist. Dazu sind entsprechende Bedienelemente für die Aktivierung der Markierung bzw. für den Messprozess in Fingerreichweite des hohl-zylindrischen Gehäuseteils ausgebildet.

Dadurch, dass die Markierungsmittel durch Betätigung eines Bedienelementes der Vorrichtung aktivierbar sind, ergeben sich beim Markieren geringe Fehlertoleranzen, da die Markierung direkt durch das Messsystem selbst, dass heißt durch die Vorrichtung gesetzt wird. Ein separates, beispielsweise im Verhältnis zur Messvorrichtung zu orientierendes Markierwerkzeug ist nicht notwendig. Insbesondere ist mit der erfindungsgemäßen Vorrichtung die Einhandbedienung für Messen und Markieren in einem Arbeitsgang in vorteilhafter Weise möglich, da die entsprechenden Bedienelemente benachbart zueinander angebracht sind.

Erfindungsgemäß sind die Markierungsmittel derart an und/oder im Gehäuse der Vorrichtung angeordnet, dass eine mit diesen Markierungsmitteln auf einem Untergrund gesetzte Markierung und der Referenzpunkt der Vorrichtung, der als geräteseitiger Bezugspunkt für die Abstandsmessung zu einem Zielobjekt gilt, in einer gemeinsamen Ebene liegen, die insbesondere senkrecht auf der Richtung ausgesandten Messsignals steht. Auf diese Weise besitzt eine auf einem Untergrund aufgebrachte Markierung im Wesentlichen den gleichen Abstand zu dem zu vermessenden Messobjekt wie der Referenzpunkt der Vorrichtung, sodass sich entsprechende Abstandswerte mit der erfindungsgemäßen Vorrichtung direkt auf einen Untergrund übertragen lassen.

In vorteilhafter Weise sind die Markierungsmittel als Farb- und/oder Formmarkierungsmittel ausgebildet, die es ermöglichen, eine entsprechende Farbmarkicrung bzw. eine Markierung in Form einer Verformung der Oberfläche des Untergrundes zu erzeugen, sodass sich die markierte Stelle des Untergrundes eindeutig identifizieren lässt. Alternativer Weise können die Markierungsmittel auch durch Einbrennen oder eine chemische Reaktion Markierung auf eine Oberfläche aufbringen bzw. in eine Oberfläche einbringen.

Besonders vorteilhaft ist es, die Markierungsvorrichtung als einen aktivierbaren Stempel auszubilden, der aus dem Gehäuse der Vorrichtung, insbesondere aus dem hohl-zylindrischen Gehäuseteil der Vorrichtung herausfährt und einen entsprechenden Stempelabdruck auf einen Untergrund, auf dem die Vorrichtung angelegt ist, abgibt.

Eine vorteilhafte Ausbildungsform der erfindungsgemäßen Vorrichtung sieht vor, dass das Messsignal ein elektromagnetisches Signal, insbesondere ein Lichtsignal und hierbei bevorzugt ein Lasersignal ist. Dabei kann die erfindungsgemäße Vorrichtung in vorteilhafter Weise als ein Laserentfernungsmesser ausgebildet sein, der die Bestimmung des Abstandes zu einem Messobjekt über die Messsignallaufzeit bzw. die Phasenverschiebung des Messsignals ermöglicht.

Alternative Ausführungsformen können jedoch beispielsweise auch durch Radarentfemungsmesser sowie Ultraschallentfernungsmesser oder dergleichen gebildet sein.

Die erfindungsgemäße Vorrichtung ermöglicht in vorteilhafter Weise die Durchführung von Distanzmessungen sowie messbegleitenden Tätigkeiten, wie beispielsweise das Abtragen bzw. Markieren von Punkten und Linien. Dabei ist in vorteilhafter Weise für diese unterschiedlichen Tätigkeiten eine Einhandbedienung der Vorrichtung und insbesondere die Einhandbedienung in lediglich einem Arbeitsgang möglich. Die erfindungsgemäße Vorrichtung zeichnet sich zudem durch eine sehr kompakte Bauform aus, sodass sich ein vielseitig verwendbares, handgehaltenes Mess- und Markierungssystem ergibt.

Weitere Vorteile ergeben sich aus der nachfolgenden Beschreibung eines Ausführungsbeispiels einer erfindungsgemäßen Vorrichtung sowie dem zugehörigen Abbildungen.

### Zeichnungen

In der Zeichnung ist ein Ausführungsbeispiel einer erfindungsgemäßen Vorrichtung zur Distanzmessung dargestellt, welche in der nachfolgenden Beschreibung näher erläutert werden soll. Die Figuren der Zeichnung, deren Beschreibung sowie die Ansprüche enthalten zahlreiche Merkmale in Kombination.

Es zeigen:
- Figur 1: eine perspektivische Ansicht einer Ausführungsform der erfindungsgemäßen Vorrichtung zur Distanzmessung,
- Figur 2: die erfindungsgemäße Vorrichtung gemäß Figur 1 in einer zweiten Perspektive,
- Figur 3: eine schematische Skizze entsprechend der Darstellung von Figur 2, zur Verdeutlichung der Anordnung vom Referenzpunkt und Markiereinheit der erfindungsgemäßen Vorrichtung.

### Beschreibung eines möglichen Ausführungsbeispiels

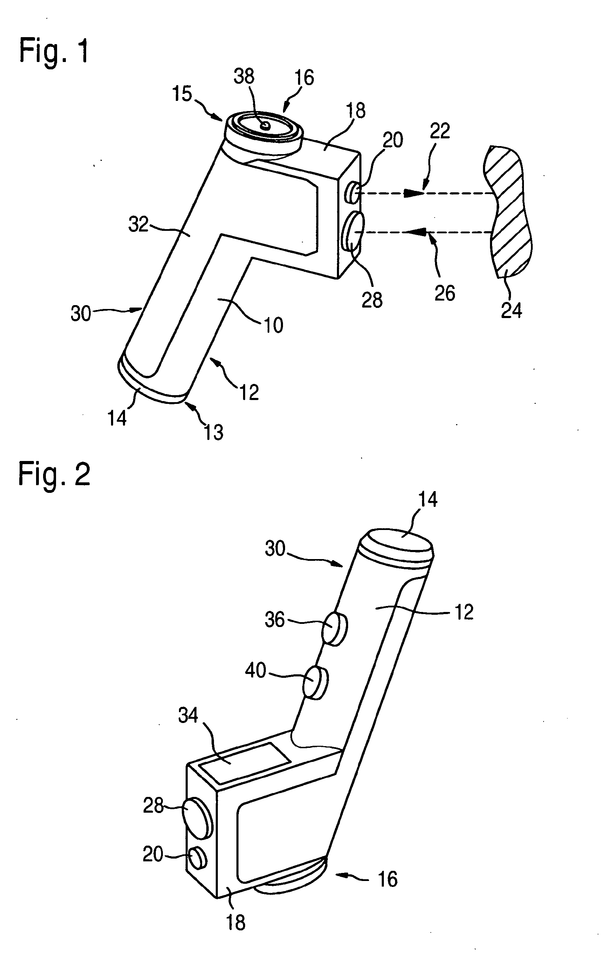

Figur 1 zeigt ein Ausführungsbeispiel der erfindungsgemäßen Vorrichtung zur Distanzmessung in Form eines elektro-optischen Laserentfernungsmessers.

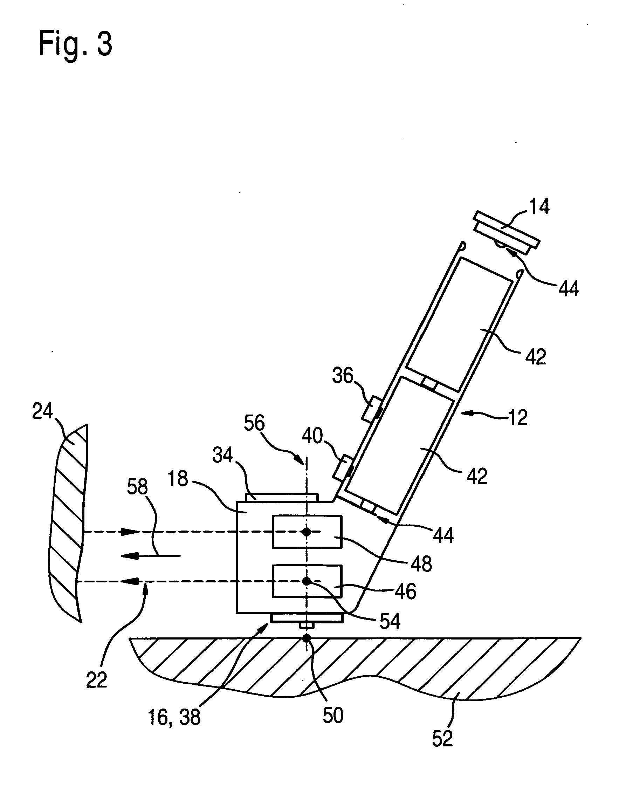

Der erfindungsgemäße Entfernungsmesser weist ein Gehäuse 10 auf, welches gebildet wird durch einen ersten Gehäuseteil 12, welcher im Wesentlichen hohl-zylinderförmig ausgebildet ist, wie dies insbesondere aus der schematischen Darstellung nach Figur 3 deutlich wird, und im Ausführungsbeispiel der Figuren 1 bis 3 einen im Wesentlichen runden Querschnitt besitzt. Auch ein im wesentlichen elliptischer Querschnitt des Gehäuseteils 12 kann vorteilhaft sein. An seinem einen axialen Ende 13, dem gemäß Figur 1 unteren Ende, besitzt der erste Gehäuseteil 12 eine Verschlusskappe 14, die den hohl-zylindrischen Innenraum des ersten Gehäuseteils 12 beispielsweise durch eine Schraubverbindung zwischen der Verschlusskappe und dem ersten Gehäuseteil verschließen kann. Der Gehäuseteil 12, der in noch zu beschreibender Weise als ein Handgriff der Vorrichtung ausgebildet ist, weist in vorteilhafter Weise auch Bedienelemente für die Vorrichtung auf, die in der Perspektive der Figur 1 nicht zu erkennen sind, jedoch nachfolgend im Zusammenhang mit Figur 2 noch näher erläutert werden sollen.

An seinem dazu entgegengesetzten, zweiten axialen Ende 15 besitzt der erste Gehäuseteil 12 eine noch näher zu beschreibende Markierungseinrichtung 16, die es ermöglicht, Markierungen auf einem Untergrund aufzubringen. In vorteilhafter Weise ist die Markierungeinrichtung 16 am zweiten axialen Ende 15 des Gehäuses im Bereich der Stirnfläche des hohl-zylindrischen ersten Gehäuseteils 12 ausgebildet.

In konstruktiver Nähe der Markierungseinrichtung 16 ist ein zweiter Gehäuseteil 18 ausgebildet, der im Ausführungsbeispiel der Figuren 1 bis 3 im Wesentlichen quaderförmig ausgeformt ist und einstückig mit dem hohl-zylindrischen ersten Gehäuseteil verbunden ist.

Im Gehäuseinneren des zweiten Gehäuseteils 18 sind eine Sende- und eine Empfangseinheit sowie, im Ausführungsbeispiel der Figuren 1 bis 3, die entsprechende Auswerteelektronik des Entfernungsmessers untergebracht. Eine Steuereinheit regelt das Zusammenspiel von Sende- und Empfangseinheit mit der zugehörigen Auswerteelektronik zur Bestimmung von Entfernungsmesswerten. Prinzipiell kann die Auswerteelektronik aber auch in einem separaten, externen Gerät untergebracht sein, so dass in diesem, zweiten Fall die Steuereinheit der Datenübertragung zwischen dem Entfernungsmessgerät und der externen Auswerteeinheit übernimmt.

Zur näheren Erläuterung der prinzipiell bekannten Funktionsweise der berührungslosen Distanzmessung sei im Rahmen der Beschreibung der erfindungsgemäßen Vorrichtung auf die DE 102 32 878 A1 bzw. auf DE 198 11 550 A1 verwiesen, die eine prinzipiell mögliche Betriebsart eines solchen Entfernungsmessers in Form eines Laserentfernungsmessers beschreiben. Hinsichtlich der Signalerzeugung sowie Signalauswertung sei daher an dieser Stelle lediglich auf diese Schriften verwiesen.

Der zweite Gehäuseteil 18 besitzt ein Austrittsfenster 20, durch das ein als Messmittel dienendes moduliertes Messsignal 22 in Richtung auf ein Zielobjekt 24 ausgesendet wird. Das an einem Zielobjekt 24 reflektierte bzw. gestreute rücklaufende Messsignal 26 gelangt durch ein Eintrittsfenster 28 zumindest teilweise wieder in das Gehäuseinnere der erfindungsgemäßen Vorrichtung und kann durch eine entsprechende Empfangseinheit, die beispielsweise einen Fotoempfänger enthält, detektiert und anschließend ausgewertet werden. Über die Laufzeit des modulierten Messsignals zum Zielobjekt 24 hin und zurück und insbesondere durch die während dieser Wegstrecke dem modulierten Messsignal aufgeprägte Phasenmodulation bzw. Phasenverschiebung kann in bekannter Weise die Entfernung zwischen dem Zielobjekt 24 und der Messvorrichtung und dabei insbesondere zwischen der Oberfläche des Zielobjektes und einem Referenz- bzw. Bezugspunkt oder Ebene der Messvorrichtung, bestimmt werden.

Figur 2 zeigt die erfindungsgemäße Vorrichtung gemäß Figur 1 in einer zweiten perspektivischen Darstellung. Neben dem ersten Gehäuseteil 12 sowie dem zweiten Gehäuseteil 18 ist in dem Gehäuse insbesondere auch eine Ausgabeeinheit 34 vorgesehen, die in dem Ausführungsbeispiel der Figuren 1 und 2 als ein optisches Display ausgebildet ist. Mit Hilfe dieser Ausgabeeinheit 34 kann einem Anwender der erfindungsgemäßen Vorrichtung beispielsweise ein gemessener Entfernungswert übermittelt werden. In vorteilhafter Weise besitzt die erfindungsgemäße Vorrichtung einen Lagesensor, beispielsweise einen oder mehrere Neigungssensoren, die es ermöglichen die relative Orientierung der Vorrichtung im Raum zu detektieren, sodass die mit der Ausgabeeinheit 34 dargestellten Ausgabewerte immer in einer für einen Anwender optimal ablesbaren Position angezeigt werden. Dazu kann sich beispielsweise die Ausgaberichtung bzw. Orientierung entsprechend der relativen Lage im Raum automatisch umschalten.

In alternativen Ausführungsformen der erfindungsgemäßen Vorrichtung kann beispielsweise auf die Auswerteeinheit sowie eine Ausgabeeinheit im Gerät selbst verzichtet werden. Die Messdaten können dann über die Schnittstelle einer Steuereinheit, beispielsweise eine Funk- oder Infrarotschnittstelle auf ein Empfangsgerät übermittelt werden, welches die Rohdaten dann auswerten und entsprechend zur Ausgabe bringt. Die erfmdungsgemäße Vorrichtung könnte in diesem Fall sehr kompakt im Sinne eines Messstiftes zur Aufnahme und Markierung von Distanzmesswerten realisiert werden. Eine graphische Darstellung der gemessenen Distanzen, beispielsweise in Form eines Grundrisses kann dann mit Hilfe eines externen Gerätes erfolgen.

Der erste Gehäuseteil 12 der erfindungsgemäßen Vorrichtung ist zudem in vorteilhafter Weise als ein Handgriff für die Vorrichtung ausgebildet und weist zumindest über einen Teil seiner Umfangsfläche einen so genannten "Softgrip" auf, d.h. eine Belegung mit einer Softkomponente, die beispielsweise aus einem relativ weichen Kunststoffmaterial besteht, welches dem zweiten Gehäuseteil beispielsweise aufgespritzt oder gleichzeitig mit diesem in einem Zweikomponentenspritzverfahren ausgebildet werden kann. In vorteilhafter Weise besitzt der als Handgriff ausgebildete Gehäuseteil 12 einen runden, elliptischen oder vergleichbaren Querschnitt, so dass das Gerät sicher und angenehm in der Hand liegt.

An seinem zweiten, der Verschlusskappe 14 entgegengesetzten, axialen Ende 15 besitzt das Gehäuse 10 und insbesondere der erste Gehäuseteil 12 des Gehäuses eine Markiereinheit 16, die im Ausführungsbeispiel der Figuren 1 und 2 als ein Markierstempel ausgebildet ist.

Die Markierungseinheit 16 gemäß Ausführungsbeispiel der Figur 1 bzw. Figur 2 ist als ein Stempel ausgebildet, der bei Aktivierung über Bedienelemente, beispielsweise bei Aktivierung einer entsprechenden Bedientaste 36, welche im dargestellten Ausführungsbeispiel am als Handgriff dienenden ersten Gehäuseteil 12 angeordnet ist, ein Stück weit aus dem zweiten Gehäuseteil 18 hervortritt und über Farbmittel einen Stempelabdruck des Markierungsstempels 38 auf einem Untergrund, auf dem die erfindungsgemäße Vorrichtung aufgesetzt bzw. aufgedrückt wird, hinterlässt. Alternativ zu den Farbmitteln des Stempels 38 können als Markierungsmittel der Markierungseinrichtung auch Formmarkierungsmittel, wie beispielsweise ein Nadelelement verwendet werden, welches bei Aktivierung einen entsprechenden Abdruck, beispielsweise ein kleines Loch in dem Untergrund hinterlässt, auf dem die erfindungsgemäße Vorrichtung mit ihrer Markierungseinrichtung aufgesetzt worden ist.

Durch die Ausbildung der Bedienelemente 36 für die Markierung bzw. der Bedienelemente 40 zur Aktivierung einer Entfernungsmessung kann die erfindungsgemäße Vorrichtung in Einhandbedienung betrieben werden, sodass Entfernungsmessung und Markierung von Referenzpunkten in einem einzigen Arbeitsgang und insbesondere parallel möglich sind. Dazu sind die Bedienelemente benachbart zueinander im Bereich des Handgriffs des Gerätes angeordnet. Markierungen können dabei in vorteilhafter Weise mit der im Entfernungsmessgerät integrierten Zeichen- bzw. Markierfunktion der Markierungseinrichtung direkt auf einen Untergrund übertragen werden. Auf diese Weise eignet sich die erfindungsgemäße Vorrichtung sowohl als Messgerät als auch als Hilfsgerät für messbegleitende Tätigkeiten, wie beispielsweise dem Abtragen und Markieren von Punkten oder Linien. Insbesondere ist zum Anbringen von Markierungen keine zweite Hand zum bedienen eines separaten Markierwerkzeuges notwendig.

Das ergonomische Stiftdesign des Ausführungsbeispiels in den Figuren 1 bis 3 ermöglicht es, die als Messstift ausgeformte erfindungsgemäße Vorrichtung ähnlich praktikabel zu führen, wie einen herkömmlichen Stift. Darüber hinaus zeichnet sich der Messstift der Ausführungsform gemäß Figur 1 bis 3 durch seine sehr kompakte Bauform aus.

Wie insbesondere der Figur 3 zu entnehmen ist, die eine schematisierte Darstellung der erfindungsgemäßen Vorrichtung wiedergibt, dient der erste Gehäuseteil 12 als Aufnahme für die Energieversorgung der erfindungsgemäßen Vorrichtung. So kann beispielsweise gemäß dem Ausführungsbeispiel in Figur 3 die zum Betrieb der Vorrichtung notwendige Energie durch eine oder mehrere Batterien 42 geliefert werden, die in den Hohlraum des als Handgriff 30 ausgebildeten ersten Gehäuseteils 12 eingebracht werden können und dort durch elektrische Kontakte 44 entsprechend mit einer Sendeeinheit 46 bzw. einer Empfangseinheit 48 verbunden sind, um diese mit Energie zu versorgen. Darüber hinaus sorgen die Energiequellen ebenso für die Energieversorgung der Auswerte- bzw. Steuereinheit des Entfernungsmessers, die Energieversorgung der als grafisches Display ausgebildeten Ausgabeeinheit 34 sowie für die Aktivierung der Markierungsmittel 16 der erfindungsgemäßen Vorrichtung.

Bei Aktivierung beispielsweise des Bedienelementes 36 fahren die als Stempel 38 ausgebildeten Markierungsmittel aus dem Gehäuse 10 der Vorrichtung ein Stück weit heraus und hinterlassen somit eine Markierung 50 auf einem Untergrund 52, auf dem die erfindungsgemäße Vorrichtung angelehnt bzw. angepresst wird. Dabei sind die Markierungsmittel der Markierungseinrichtung derart am bzw. im Gehäuse 10 der erfindungsgemäßen Vorrichtung angeordnet, dass die auf diese Weise erzeugte Markierung 50 und ein Referenzpunkt 54, von dem aus die Entfernung der Vorrichtung zu einem Zielobjekt 24 hin gemessen wird, in einer gemeinsamen Ebene 56 liegen, die senkrecht auf der Richtung 58 des ausgesandten Messsignals 22 steht.

In alternativen Ausführungsformen können die Markierungsmittel auch dadurch aktiviert werden, dass das Gerät mit dem Markierungsmitteln gegen eine Oberfläche gedrückt wird, so dass dann beispielsweise ein Stempelabdruck auf der Oberfläche erzeugt wird. Der Stempel kann dabei beispielsweise aufgrund des Anpressdruckes des Messgerätes gegen die Oberfläche aktiviert werden oder aber auch ständig ausgefahren sein.

Neben den beschriebenen Form- oder Farbmarkierungen, könne auch Markierungsmittel Verwendung finden, die beispielsweise eine Markierung in die Oberfläche einbrennen oder eine solche durch eine chemische Reaktion erzeugen.

Durch diese vorteilhafte Anordnung der Markierungseinrichtung am bzw. im Gehäuse der erfindungsgemäßen Vorrichtung hat ein mittels der Markierungsvorrichtung aufgebrachte Markierung auf einem Untergrund den gleichen Abstand zu einem Zielobjekt wie der Referenzpunkt 54 bzw. die Referenzebene 56 der Entfernungsmessung, sodass der mittels der Ausgabeeinheit 34 der Vorrichtung angezeigte Abstandwert der Vorrichtung zu dem Zielobjekt auch zugleich der Abstand der Markierung zu dem Zielobjekt ist.

Bei der erfindungsgemäßen Vorrichtung kann vorgesehen sein, dass bei Aktivierung einer Messtaste 40 ein Dauermessmodus aktiviert wird, der kontinuierlich den jeweiligen Abstand zu einem angepeilten Zielobjekt misst und diesen Abstand in der Ausgabeeinheit darstellt. Altemativ kann jedoch auch vorgesehen sein, dass wie bei herkömmlichen Entfernungsmessern, jeweils nur Einzelmessungen bei Aktivierung einer entsprechenden Messtaste gestartet werden.

Darüber hinaus kann beispielsweise mittels einer "Memory-Taste" ein Messwert im Gerät gespeichert und beim Abtragen im Display beispielsweise hervorgehoben angezeigt werden. So kann beispielsweise beim Abtragen eines Wertes mit Hilfe der erfindungsgemäßen Vorrichtung in der Ausgabeeinheit ein Pfeil oder eine Linie eingeblendet werden, welche die Lage des abzutragenden Messwertes im Bezug zum Anzeigenbereich der Ausgabeeinheit angibt.

Des Weiteren ist es möglich, mit integrierten mechanischen oder elektronischen Libellen eine Nivellierung in der erfindungsgemäßen Vorrichtung zu integrieren, die beispielsweise mit Hilfe einer Digitalanzeige der Ausgabeeinheit dargestellt werden kann.

Die erfindungsgemäße Vorrichtung ist nicht auf die in den Figuren dargestellte Ausführungsform beschränkt.

Insbesondere ist die erfindungsgemäße Vorrichtung nicht beschränkt auf die Verwendung eines Lasersignals als Messsignal. Neben der Verwendung weiterer elektromagnetischer Strahlung, insbesondere beispielsweise Radarstrahlung kann die Entfernungsmessung auch durch die Verwendung von akustischen Signalen, insbesondere von Ultraschallsignalen durchgeführt werden.

## Patentansprüche

1. Vorrichtung zur Distanzmessung, insbesondere eine handgehaltene Vorrichtung zur berührungslosen Distanzmessung, welche mittels eines ausgesandten Messmittels (22), insbesondere mittels eines modulierten Messsignals, die Bestimmung eines Abstandes zwischen einem Zielobjekt (24) und zumindest einem Referenzpunkt (54) der Vorrichtung ermöglicht, aufweisend zumindest ein Gehäuse (10) mit einer im Gehäuse (10) vorhandenen Sende- und Empfangseinheit (46,48), **dadurch gekennzeichnet, dass** das Gehäuse zudem über zumindest eine Markierungseinrichtung (16) verfügt, die dazu vorgesehen ist, Markierungen (50) auf oder in einem Untergrund (52) aufzubringen oder einzubringen, wobei die Markierungseinrichtung (16) über Markierungsmittel (38) verfügt, die derart am und/oder im Gehäuse (10) angeordnet sind, dass eine Markierung (50) und der Referenzpunkt (54) der Vorrichtung in einer gemeinsamen Ebene (56) liegen, wobei diese Ebene (56) senkrecht auf der Richtung (58) des ausgesandten Messmittels (22) steht.

2. Vorrichtung nach einem der vorhergehenden Ansprüche 1, **dadurch gekennzeichnet, dass** das Gehäuse (10) einen im Wesentlichen hohl-zylindrischen, insbesondere stabförmigen Gehäuseteil (12) aufweist.

3. Vorrichtung nach Anspruch 2, **dadurch gekennzeichnet, dass** die Markierungseinrichtung (16) an einem axialen Ende (15) des hohl-zylindrischen Gehäuseteils (12) ausgebildet sind.

4. Vorrichtung nach einem der vorhergehenden Ansprüche, **dadurch gekennzeichnet, dass** die Markierungsmittel (38) der Markierungseinrichtung (16) durch zumindest ein Bedienelement (36,40) der Vorrichtung aktivierbar sind.

5. Vorrichtung nach einem der vorhergehenden Ansprüche, **dadurch gekennzeichnet, dass** die Markierungsmittel (38) der Markierungseinrichtung (16) Farb- und/oder Formmarkierungsmittel sind.

6. Vorrichtung nach Anspruch 2, **dadurch gekennzeichnet, dass** der hohlzylindrische Gehäuseteil (12) als Handgriff der Vorrichtung ausgebildet ist.

7. Vorrichtung nach zumindest einem der Ansprüche 2 oder 6, **dadurch gekennzeichnet, dass** der hohl-zylindrische Gehäuseteil (12) auf seiner äußeren Umfangsfläche zumindest teilweise eine Belegung mit einer Softkomponente (32) aufweist.

8. Vorrichtung nach zumindest einem der Ansprüche 2, 6 oder 7, **dadurch gekennzeichnet, dass** der hohl-zylindrische Gehäuseteil (12) als Aufnahme für eine oder mehrere Energiequellen (42) der Vorrichtung ausgebildet ist.

9. Vorrichtung nach einem der vorhergehenden Ansprüche, **dadurch gekennzeichnet, dass** das Messmittel (22) ein elektro-magnetisches Signal ist.

10. Vorrichtung nach Anspruch 9, **dadurch gekennzeichnet, dass** das Messmittel (22) ein Lichtsignal, insbesondere ein Lasersignal ist.

11. Vorrichtung nach Anspruch 9, **dadurch gekennzeichnet, dass** das Messmittel ein Radarsignal ist.

12. Vorrichtung nach einem der vorhergehenden Ansprüche 1 bis 8, **dadurch gekennzeichnet, dass** das Messmittel ein akustisches Signal, insbesondere ein Ultraschallsignal ist.

## Claims

1. Device for distance measurement, in particular a hand-held device for contactless distance measurement, which, by means of an emitted measuring means (22), in particular by means of a modulated measuring signal, enables the determination of a distance between a target object (24) and at least one reference point (54) of the device, having at least one housing (10) with a transceiver unit (46, 48) present in the housing (10), **characterized in that** the housing additionally has at least one marking device (16) which is provided for the purpose of applying or introducing markings (50) to or into an underlying surface (52), the marking device (16) having marking means (38) which are arranged on and/or in the housing (10) in such a way that a marking (50) and the reference point (54) of the device lie in a common plane (56), this plane (56) being perpendicular to the direction (58) of the emitted measuring means (22).

2. Device according to Claim 1, **characterized in that** the housing (10) has a housing part (12) which is substantially in the shape of a hollow cylinder, in particular rod shaped.

3. Device according to Claim 2, **characterized in that** the marking device (16) is formed at an axial end (15) of the hollow cylindrical housing part (12).

4. Device according to one of the preceding claims, **characterized in that** the marking means (38) of the marking device (16) can be activated by at least one operating element (36, 40) of the device.

5. Device according to one of the preceding claims, **characterized in that** the marking means (38) of the marking device (16) are colour and/or shape marking means.

6. Device according to Claim 2, **characterized in that** the hollow cylindrical housing part (12) is designed as a handle of the device.

7. Device according to at least one of Claims 2 or 6, **characterized in that** the hollow cylindrical housing part (12) has a coating with a soft component (32) at least partially on its outer circumferential surface.

8. Device according to at least one of Claims 2, 6 or 7, **characterized in that** the hollow cylindrical housing part (12) is designed as a holder for one or more energy sources (42) of the device.

9. Device according to one of the preceding claims, **characterized in that** the measuring means (22) is an electromagnetic signal.

10. Device according to Claim 9, **characterized in that** the measuring means (22) is a light signal, in particular a laser signal.

11. Device according to Claim 9, **characterized in that** the measuring means is a radar signal.

12. Device according to one of the preceding Claims 1 to 8, **characterized in that** the measuring means is an acoustic signal, in particular an ultrasonic signal.

## Revendications

1. Dispositif de mesure de distance, notamment dispositif portatif de mesure de distance sans contact, qui permet, à l'aide d'un moyen de mesure (22) envoyé, notamment à l'aide d'un signal de mesure modulé, de déterminer une distance entre un objet cible (24) et au moins un point de référence (54) du dispositif, comportant au moins un carter (10) pourvu d'une unité d'envoi et de réception (46, 48) présente dans le carter (10), **caractérisé en ce que** le carter dispose en outre d'au moins un dispositif de marquage (16) prévu pour appliquer ou introduire des marquages (50) sur ou dans un sous-sol (52), le dispositif de marquage (16) disposant de moyens de marquage (38) disposés de telle sorte contre et/ou dans le carter (10) qu'un marquage (50) et le point de référence (54) du dispositif se placent dans un plan commun (56), ce plan (56) se positionnant verticalement en se superposant à la direction (58) du moyen de mesure (22) envoyé.

2. Dispositif selon la revendication 1, **caractérisé en ce que** le carter (10) comporte une partie de carter (12) pour l'essentiel en forme de cylindre creux, notamment en forme de tige.

3. Dispositif selon la revendication 2, **caractérisé en ce que** le dispositif de marquage (16) est réalisé au niveau d'une extrémité axiale (15) de la partie de carter (12) en forme de cylindre creux.

4. Dispositif selon l'une quelconque des revendications précédentes, **caractérisé en ce que** les moyens de marquage (38) du dispositif de marquage (16) peuvent être activés par le biais d'au moins un élément de commande (36, 40) du dispositif.

5. Dispositif selon l'une quelconque des revendications précédentes, **caractérisé en ce que** les moyens de marquage (38) du dispositif de marquage (16) sont des moyens de marquage par couleur et/ou forme.

6. Dispositif selon la revendication 2, **caractérisé en ce que** la partie de carter (12) en forme de cylindre creux prend la forme d'une poignée du dispositif.

7. Dispositif selon au moins l'une quelconque des revendications 2 ou 6, **caractérisé en ce que** la partie de carter (12) en forme de cylindre creux comporte sur sa surface périphérique extérieure au moins en partie un revêtement réalisé à partir d'un composant mou (32).

8. Dispositif selon au moins l'une quelconque des revendications 2, 6 ou 7, **caractérisé en ce que** la partie de carter (12) en forme de cylindre creux prend la forme d'un logement prévu pour une ou plusieurs sources d'énergie (42) du dispositif.

9. Dispositif selon l'une quelconque des revendications précédentes, **caractérisé en ce que** le moyen de mesure (22) est un signal électromagnétique.

10. Dispositif selon la revendication 9, **caractérisé en ce que** le moyen de mesure (22) et un signal lumineux, notamment un signal laser.

11. Dispositif selon la revendication 9, **caractérisé en ce que** le moyen de mesure et un signal radar.

12. Dispositif selon l'une quelconque des revendications précédentes 1 à 8, **caractérisé en ce que** le moyen de mesure et un signal acoustique, notamment un signal à ultrasons.
